# EUROPÄISCHE PATENTSCHRIFT

(11) **EP 2 035 808 B1**
(45) Veröffentlichungstag und Bekanntmachung des Hinweises auf die Patenterteilung: **09.08.2017**
(21) Anmeldenummer: 07725916.6
(22) Anmeldetag: 08.06.2007
(51) Int. Cl.: G01N 21/35, G01N 21/64, B21B 45/02

(54) **VERFAHREN ZUR ANALYSE UND KORREKTUR DER ZUSAMMENSETZUNG EINES HILFSTOFFS VOR EINEM UMFORMPROZESS**
METHOD FOR ANALYSIS AND CORRECTION OF THE COMPOSITION OF AN AUXILIARY AGENT BEFORE A SHAPING PROCESS
PROCÉDÉ POUR ANALYSE ET CORRECTION DE LA COMPOSITION D'UNE AGENT AUXILIAIRE AVANT UNE PROCÉDÉ DE DÉFORMATION PLASTIQUE

(30) Priorität: 17.06.2006 DE 102006027972; 06.12.2006 DE 102006057476
(43) Veröffentlichungstag der Anmeldung: 18.03.2009
(73) Patentinhaber: SMS group GmbH, 40237 Düsseldorf (DE)
(72) Erfinder: KOHLRAUSCH, Arnt, 57223 Kreuztal (DE); PAWELSKI, Hartmut, 40883 Ratingen (DE); RICHTER, Hans-Peter, 57520 Friedewald (DE)
(74) Vertreter: Klüppel, Walter
(86) Internationale Anmeldenummer: PCT/EP2007/005076
(87) Internationale Veröffentlichungsnummer: WO 2007/147489

(56) Entgegenhaltungen:
- EP-A- 0 543 057
- EP-A1- 0 874 234
- WO-A-99/15881
- DE-A1- 19 744 503
- GB-A- 1 191 476
- US-A- 4 892 133
- US-A- 5 225 675
- US-A- 5 919 707
- US-A1- 2002 019 321

## Beschreibung

Die Erfindung bezieht sich auf ein Verfahren zum Korrigieren der chemischen Zusammensetzung eines Hilfstoffs auf der Oberfläche eines Umformgutes. Dieses Verfahren beruht auf ein Verfahren zum Analysieren einer Schicht eines Hilfsstoffes auf der Oberfläche eines Umformgutes, insbesondere eines Metallbandes, vor und/oder nach einem Umformprozess, insbesondere einem Walzprozess, im Hinblick auf verschiedene Messgrößen. Die Erfindung bezieht sich außerdem auf eine Vorrichtung mit mindestens einer Detektoreinrichtung zum Erzeugen eines Abtastsignals von einer Schicht eines Hilfsstoffs auf der Oberfläche des Umformgutes, wobei die Detektoreinrichtung vor und/oder hinter einer Umformeinrichtung, insbesondere einem Walzgerüst, angeordnet ist, und mit einer Analyseeinrichtung zum Analysieren des von der Detektoreinrichtung erzeugten Abtastsignals im Hinblick auf verschiedene spezifische Messgrößen für den Hilfsstoff.

Grundsätzlich besteht bei Umformvorgängen ein Bedarf an der Verwendung eines Hilfsstoffes, zum hinreichenden Separieren von Walzgut und Walzen. Falls diese Separierung nicht in der gewünschten Weise gelingt, kommt es zu einem metallischen Kontakt der an der Umformung beteiligten Partner und aufgrund deren Relativbewegung zueinander zu Störungen der gewünschten Oberflächenstruktur des Walzgutes.

Aus dem Stand der Technik sind dazu mehrere Verfahren der gattungsgemäßen Art bekannt:
Aus der DE 197 44 503 A1 ist eine Vorrichtung und ein Verfahren zur Beeinflussung der Reibungsverhältnisse zwischen jeweils der oberen und der unteren Walze in Walzgerüsten von Warmbreitband- oder Kaltbandstraßen bekannt.

Das Verfahren ist dabei im wesentlichen dadurch gekennzeichnet, dass die Bandoberseite und/oder die Bandunterseite des Walzgutes an der Einlaufseite des Walzgerüstes durch eine Sprüheinrichtung mit einer definierten Menge Flüssigkeit benetzt wird und eine Regeleinrichtung die mengenmäßige Bestimmung und die Abgabe der Flüssigkeit regelt, wobei als Regelgröße eine in Verbindung mit dem tatsächlichen Walzdrehmoment der unteren und/oder der oberen Walze vorermittelte oder errechnete Größe verwendet wird. Mit einem derartigen Verfahren soll insbesondere erreicht werden, dass sowohl zwischen der Bandoberseite des Walzgutes und der oberen Walze als auch zwischen der Bandunterseite des Walzgutes und der unteren Walze nahezu gleiche Reibverhältnisse entstehen, um den Wirkungsgrad des Walzprozesses zu verbessern sowie den Verschleiß der oberen und der unteren Walze zu vermindern und weiterhin die häufig bei größeren Dickenreduktionen auftretende Vibrationsneigung zu dämpfen.

Bei diesem und anderen vorbekannten Verfahren besteht grundsätzlich das Bedürfnis, eine höhere Produktion von qualitativ hochwertigerem metallischen Walzband durch Einsparung von Prozessschritten zu erzielen, wobei bessere Bandqualitäten durch einen stabileren Walzprozess, insbesondere eine Reibungsanpassung im Walzspalt, ermöglicht werden sollen. Es wird dazu in der anmeldereigenen, prioritätsälteren, nicht vorveröffentlichten deutschen Patentanmeldung DE 10 2005 042 020.6 vorgeschlagen, dass auf der Einlaufseite eine Minimalmenge an reinem Schmiermittel ohne hohen Wasseranteil mit kontrollierter Viskosität in Abhängigkeit einer Vielzahl von Prozessdaten kontinuierlich online dosiert über ein physikalisches Rechenmodell aufgetragen wird.

Daraus ergibt sich ein stabilerer Walzprozess, insbesondere wird eine Reibungsanpassung im Walzspalt ermöglicht. Darüber hinaus ist es vorteilhaft, dass eine spätere Restölentfernung nicht mehr notwendig ist und dadurch weitere Prozessschritte erspart werden, denn Minimalschmierung bedeutet, dass nur so viel Schmiermittel auf der Einlaufseite aufgebracht wird, wie zum Erreichen einer gewünschten Produktqualität notwendig ist und während des Walzprozesses auchtatsächlich verbraucht wird. Außerdem entfallen Einrichtungen und deren Kosten für die Entsorgung der Öl-Emulsionen.

Die europäische Patentanmeldung EP 0 543 057 A1 offenbart ein Verfahren zur Bestimmung des Ölgehaltes einer Öl-Wasser-Emulsion. Das Verfahren sieht vor, dass - vor Verwendung der Emulsion - ein Indicator in die Öl-Phase der Emulsion eingebracht wird und nachfolgend der Öl-Gehalt der Emulsion während oder nach der Verwendung der Emulsion mit Hilfe einer spektrophotometrischen Analyse ermittelt wird.

Die Druckschrift DE 197 44 503 beschreibt eine Regelung bzw. Steuerung, wonach tatsächlich auftretende Drehmomente an der oberen und der unteren Walze eines Walzgerüstes messtechnisch erfasst und die Drehmomentendifferenz, die aus diesen beiden ermittelten Drehmomentwerten errechnet wird, steht dann als zu korrigierende Regelabweichung für einen Regelprozess zur Verfügung. Gemäß der technischen Lehre der DE 197 44 503 wird diese Regelabweichung der Drehmomente dadurch korrigiert, dass die chemische Zusammensetzung eines Wasser-Ölgemisches, insbesondere der Ölanteile dieses Gemisches nach Maßgabe der festgestellten Drehmomentendifferenz geeignet eingestellt werden. Durch die Veränderung der chemischen Zusammensetzung dieses Gemisches wird der Reibwert zwischen dem Walzgut und den Walzen verändert mit dem Ziel, die Regelabweichung zu minimieren. Insofern erfolgt bei der DE 197 44 503 ausdrücklich ein korrigierender Eingriff auf die chemische Zusammensetzung des Hilfsstoffes, welches vor einem Umformprozess, dass heißt dem Walzprozess auf das Walzgut aufgebracht wird.

US5,919,707 zeigt ein Verfahren zum Korrigieren der chemischen Zusammensetzung eines Hilfsstoffes vor einem Walzprozess, wobei erforderlichenfalls korrigierend auf die chemische Zusammensetzung des vor dem Walzprozess aufgetragenen Hilfsstoffs eingewirkt wird. Die chemische Zusammensetzung wird mittels Reflexionsspektroskopie ermittelt.

Ausgehend von diesem Stand der Technik liegt der Erfindung die Aufgabe zugrunde, ein alternatives Verfahren zum Korrigieren der Zusammensetzung eines aufzutragenden Hilfsstoffs auf ein Umformgut bereit zu stellen.

Diese Aufgabe wird durch das in dem Anspruch 1 beanspruchte Verfahren gelöst.

Der Begriff Hilfsstoff bezeichnet im Rahmen der vorliegenden Beschreibung allgemein einen Stoff, welcher dazu dient, bei einem Umformprozess, insbesondere einem Walzprozess, eine hinreichende Separierung zwischen Umformgut und Umformvorrichtung, insbesondere Arbeitswalzen, zu gewährleisten.

Die beanspruchte Lösung, nämlich eine Analyse des Hilfsstoffes vor und nach dem Umformprozess, ermöglicht vorteilhafterweise einen Rückschluss auf den Verbrauch des Hilfsstoffes während des Umformprozesses. Die so ermittelte verbrauchte Menge des Hilfstoffs ermöglicht ihrerseits wiederum einen Rückschluss auf die thermischen Bedingungen während des Umformprozesses. Neben der verbrauchten Menge ermöglicht die beanspruchte Analyse mit Hilfe der Spektralanalyse auch einen Vergleich zwischen der chemischen Zusammensetzung des Hilfsstoffes vor und nach des Umformprozesses, wobei der Vergleich einen Rückschluss auf den Verbrauch bestimmter Komponenten des Hilfsstoffs, wie z.B. Additive, oder auf die Bildung von Reaktionsprodukten während des Umformprozesses ermöglicht. Solche festgestellten Vorkommnisse können gezielt unterstützt werden, wenn sie erwünscht sind, d.h. in den Fällen, wo umformrelevante Stoffe erst während des Umformprozesses gebildet werden, oder ihnen kann frühzeitig entgegengewirkt werden.

Schließlich ist als besonders vorteilhaftes Merkmal des Anspruchs 1 zu erwähnen, dass die Spektralanalyse des Hilfsstoffes online erfolgt. Die Ergebnisse der Spektralanalyse des Hilfsstoffes stehen damit in Echtzeit zur Verfügung und können unmittelbar, d.h. noch während des laufenden Umformprozesses, dazu verwendet werden, diesen noch zu beeinflussen. Diese Beeinflussung kann in Form einer gezielten steuerungstechnischen oder regelungstechnischen Beeinflussung der Umformvorrichtung oder, wie bereits erwähnt, des applizierten Hilfsstoffes erfolgen.

Bei einer bevorzugten Ausführungsform der vorliegenden Erfindung handelt es sich bei der Spektralanalyse um die laserinduzierte, zeitaufgelöste Fluoreszenzspektralanalyse oder um eine Spektralanalyse im infraroten Lichtbereich. Dieses sind besonders geeignete Messverfahren zum Analysieren einer Schicht des Hilfsstoffes.

Nach einem weiteren Ausgestaltungsmerkmal der vorliegenden Erfindung ist vorgesehen, dass es sich bei dem Hilfsstoff beispielsweise um einen Schmierstoff, einen Kühlschmierstoff, ein Dressiermittel oder ein Nassdressiermittel handelt.

Zweckmäßig ist es nach einem weiteren Ausgestaltungsmerkmal der vorliegenden Erfindung, dass es sich bei den analysierten Messgrößen des Hilfsstoffs, ausser dessen Zusammensetzung z.B. um dessen Menge pro Flächeneinheit, die Homogenität von dessen Verteilung auf dem Umformgut und/oder dessen Schichtdicke handelt. Zu den sich dabei ergebenden Vorteilen sei auf die zuvor bereits gemachten Ausführungen verwiesen.

Es empfiehlt sich nach einem weiteren Ausgestaltungsmerkmal der vorliegenden Erfindung, dass die Messgrößen als Regelgrößen mindestens einem Regelkreis zugeführt werden, welcher eine Applizierung des Hilfsstoffes auf das Umformgut nach Maßgabe von vorgegebenen Sollwerten veranlasst, wobei die Sollwerte für die Regelgrößen so vorgegeben sind, dass sie - bei Zugrundelegung des vorbekannten Umformprozesses - zur Einstellung bestimmter Umformparameter bei dem Umformprozess selber und/oder zur Ausbildung von Qualitätsmerkmalen in einem jeweils gewünschten Ausmaß bei dem umgeformten Umformgut führen. Bei den beeinflussbaren Umformparametern kann es sich in bevorzugter Ausgestaltung z.B. um die Größe der Walzkraft oder die Stärke von Vibrationen von Walzen in einer Umformeinrichtung handeln.

Nach einem weiteren Merkmal der vorliegenden Erfindung ist vorgesehen, dass der Regelkreis - im Falle der Erfassung einer unerwünschten oder fehlerhaften, z.B. kontaminierten Zusammensetzung des Hilfsstoffes - ausgebildet ist, unter Zugriff auf Vorratsbehälter mit verschiedenen Komponenten, aus denen der Hilfsstoff zusammen gesetzt ist, den Hilfsstoff nachfolgend entsprechend den vorgegebenen Sollwerten für dessen Zusammensetzung zusammen zu mischen bzw. dessen Zusammensetzung noch während eines laufenden Umformprozesses zu korrigieren.

Zweckmäßig ist es nach einem weiteren Merkmal der vorliegenden Erfindung, dass zur Berechnung der Sollwerte der Umformprozess durch ein mathematisches Modell simuliert wird.

Nach einem weiteren Merkmal der vorliegenden Erfindung ist vorgesehen, dass es sich bei den Qualitätsmerkmalen für das umgeformte Umformgut z.B. um dessen Planheit, dessen Glanz oder dessen Texturierung, insbesondere das Nichtvorhandensein von Fischgrätmustern, handelt.

Nach einem bezüglich des Verfahrens weiteren Merkmal der vorliegenden Erfindung ist vorgesehen, dass einzelnen Komponenten des Hilfsstoffs gezielt Marker- oder Tracer- Substanzen beigegeben sind. Diese Marker- und/oder Tracer- Substanzen können gewünschtenfalls gezielt einzelnen Komponenten des Hilfsmittels beigegeben werden, um deren Signalstärke in geeigneter Weise anzupassen.

Bei der bevorzugten Ausführungsform der vorliegenden Erfindung hinsichtlich der Vorrichtung ist mindestens ein Beleuchtungsmittel zum Beleuchten des Hilfsstoffs auf dem Umformgut während des Abtastens vorgesehen. Die Beleuchtung bewirkt eine Aktivierung oder Verstärkung der Wirkung der Marker- bzw. Tracer-Substanzen und verbessert allgemein die Detektion und damit das Ergebnis der Spektralanalyse z.B. bezüglich der Mengenverteilung oder der Verteilung der Zusammensetzung des Hilfsstoff auch quer zur Walzrichtung.

Sind die Detektoreinrichtung oder die Beleuchtungsquelle jeweils nur einfach vor und/oder hinter der Umformeinrichtung vorhanden und im Vergleich zur Breite des Umformgutes klein dimensioniert, so ist es von Vorteil, wenn sie quer zur Walzrichtung verfahrbar ausgebildet sind, um eine Detektion und Analyse des Hilfsstoffes über der gesamten Breite des Umformgutes zu ermöglichen. Ist die Detektoreinrichtung in Form einer Mehrzahl von Beleuchtungselementen vor und/oder hinter dem Walzspalt ausgebildet, so müssen diese Elemente nicht notwendiger Weise verfahrbar sein; allerdings wäre es vorteilhaft, wenn diese Elemente auch in einer Richtung quer zur Walzrichtung über dem Umformgut verteilt angeordnet sind, um die Analyse des Hilfsstoffes über der gesamten Breite des Umformgutes zu ermöglichen. Die Detektoreinrichtung oder die Detektorelemente sind vorzugsweise als Scanner ausgebildet.

Schließlich ist nach einem letzten Merkmal der vorliegenden Erfindung ist vorgesehen, dass die Analyseeinrichtung ausgebildet ist zur Durchführung des Verfahrens nach einem der sich darauf beziehenden Ansprüche.

Der Beschreibung sind insgesamt vier Figuren beigefügt, wobei
- Figur 1: ein erstes Ausführungsbeispiel der Erfindung;
- Figur 2: eine Variante zur Ausgestaltung einer Detektoreinrichtung;
- Figur 3: ein zweites Ausführungsbeispiel der Erfindung; und
- Figur 4: ein drittes Ausführungsbeispiel der Erfindung
zeigt.

Die Erfindung wird nachfolgend unter Bezugnahme auf die genannten Figuren Form von Ausführungsbeispielen detailliert beschrieben. In allen Figuren sind gleiche technische Elemente mit gleichen Bezugszeichen bezeichnet. Die Zusätze "-l" oder "-r" bei einzelnen Bezugzeichen deuten an, dass die entsprechend bezeichneten Elemente in Walzrichtung R gesehen entweder vor (-l) oder hinter (-r) der Umformeinrichtung 20 angeordnet sind. Der Einfachheit halber werden die Bezugzeichen in der nachfolgenden Beschreibung in der Regel ohne diese Zusätze verwendet, sofern dies zur Darstellung eines konkreten Sachverhaltes nicht unbedingt erforderlich erscheint.

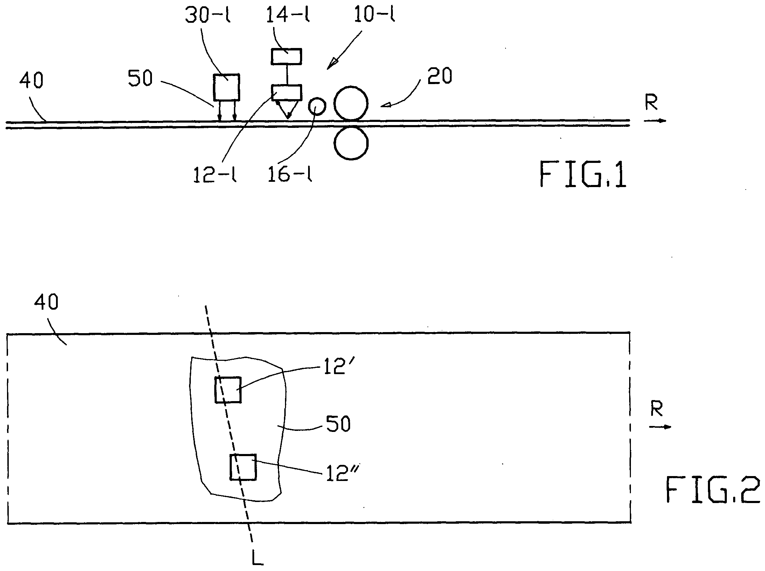

Die Erfindung betrifft generell ein Verfahren gemäss Anspruch 1. Figur 1 zeigt dazu eine Vorrichtung, die in einem nicht beanspruchten Verfahren benutzt wird. Konkret ist in Figur 1 eine Umformeinrichtung 20 in Form eines Walzwerkes symbolisch dargestellt. Der Umformeinrichtung 20 wird ein Umformgut 40 zwecks Umformung, beispielsweise zwecks Dickenreduktion, zugeführt. Das Umformgut 40 durchläuft die Umformeinrichtung 20 in Walzrichtung R.

Zur Vereinfachung des Umformprozesses und zur Verbesserung der Qualität des Umformgutes 40 nach dem Umformprozess im Hinblick auf bestimmte Qualitätsmerkmale, wie z.B. Planheit, Glanz, Texturierung oder das NichtVorhandensein von Fischgrätenmustem etc., wird dem Umformgut 40 vor Eintritt in die Umformeinrichtung 20 mit Hilfe einer Sprühdüsenreihe 30 ein Hilfsstoff 50 zugeführt. Bei dem Hilfsstoff kann es sich beispielsweise um einen Schmierstoff, einen Kühlschmierstoff, ein Dressiermittel oder ein Nassdressiermittel handeln. Der Hilfsstoff kann, wie Figur 1 gezeigt, auf die Oberseite des Umformgutes 40 oder auf dessen Unterseite (nicht gezeigt, gilt auch für alle nachfolgenden Ausführungsbeispiele) aufgetragen werden.

Bei der in Figur 1 gezeigten Vorrichtung wird der auf die Oberfläche des Umformgutes 40 aufgetragene Hilfsstoff mit Hilfe einer erfindungsgemäßen Vorrichtung 10 analysiert, bevor er zusammen mit dem Umformgut 40 in die Umformeinrichtung 20 eintritt. Die erfindungsgemäße Vorrichtung 10 umfasst eine Detektoreinrichtung 12 zum Erzeugen eines Abtastsignals von einer Schicht des Hilfsstoffes 50 auf der Oberfläche des Umformgutes 40; bei der Detektoreinrichtung 12 kann es sich z.B. um einen Scanner handeln.

Figur 2 zeigt eine räumlichen Ausgestaltung der Detektoreinrichtung 12. Beispielhaft ist dort gezeigt, dass die Detektoreinrichtung aus einzelnen Detektorelementen 12', 12" ..., vorzugsweise Scannerelementen bestehen kann, welche auf einer Linie L mit einer Komponente quer zur Walzrichtung R ortsfest angeordnet sind. Alternativ dazu kann die Detektoreinrichtung 12 auch lediglich aus einem Scannerelement bestehen, welches dann jedoch vorzugsweise mit einer Komponente quer zur Walzrichtung R und damit in Breitenrichtung des Umformgutes 40 verfahrbar ist. Beide alternativen Ausgestaltungen dienen dazu, z.B. die Mengen- oder Temperaturverteilung des Hilfsstoffes oder die Verteilung seiner chemischen Zusammensetzung auch quer zur Walzrichtung R zu ermitteln.

In Figur 1 ist weiterhin zu erkennen, dass das von der Detektoreinrichtung 12 erzeugte Abtastsignal einer Analyseeinrichtung 14 zugeführt wird, um von dieser ausgewertet zu werden. Bei der Analyseeinrichtung handelt es sich um eine Spektralanalyseeinrichtung, welche beispielsweise im infraroten Lichtbereich oder nach dem Prinzip der laserinduzierten zeitaufgelösten Fluoreszenz-Spektralanalyse arbeitet. Die Analyseeinrichtung 14 wertet das von der Detektoreinrichtung 12 empfangene Abtastsignal im Hinblick auf verschiedene Messgrößen des Hilfsstoffes 50 aus. Bei diesen analysierten Messgrößen kann es sich z.B. um die Menge des Hilfsstoffes pro Flächeneinheit, dessen chemische Zusammensetzung, die Homogenität von dessen Verteilung auf dem Umformgut 40 z.B. auch quer zur Walzrichtung R und/oder um die Schichtdicke des Hilfsstoffes 50 auf dem Umformgut 40 handeln.

Die Analyse des Hilfsstoffes 50 (wie in Figur 1 gezeigt) vor dessen Eintritt in die Umformeinrichtung 20 mit Hilfe der oben unter Bezugnahme auf Figur 2 beschriebenen Detektoreinrichtung ermöglicht vorteilhafterweise z.B. eine Kontrolle, ob das Hilfsmittel in Breitenrichtung, d.h. quer zur Walzrichtung R in gewünschter Weise auf der Oberfläche des Umformgutes 40 aufgebracht ist. Gewünscht ist in der Regel eine gleichmäßige homogene Verteilung; alternativ dazu kann jedoch auch eine gezielt inhomogene Verteilung gewünscht sein. Die Verteilung bezieht sich insbesondere auf die Schichtdicke des aufgetragenen Hilfsstoffes 50; sie kann sich jedoch auch auf dessen lokale Zusammensetzung beziehen. Sollte die von der Analyseeinrichtung 14 durchgeführte Spektralanalyse eine von der gewünschten MengenVerteilung abweichende Verteilung ergeben, so besteht bei der in Figur 1 gezeigten Anordnung die Möglichkeit, gezielt auf die Sprühdüsenreihe 30 einzuwirken, indem z.B. einzelne von deren Sprühdüsen gezielt ein- oder abgeschaltet werden. Auf die chemische Zusammensetzung des aufgetragenen Hilfstoffes wird korrigierend eingewirkt, z.B. indem einzelne Komponenten dieses Hilfsstoffes durch Zugriff auf entsprechende Vorratsbehälter verstärkt oder weniger stark dem Hilfsstoff beigemengt werden. Aufgrund der Tatsache, dass die Spektralanalyse des Abtastsignals erfindungsgemäß online erfolgt, können die beschriebenen korrigierenden Eingriffe quasi in Echtzeit auch während eines laufenden Umformprozesses vorgenommen werden.

Während des Abtastvorganges wird der Hilfsstoff 50 auf der Oberfläche des Umformgutes 40 vorzugsweise mit Hilfe eines Beleuchtungsmittels 16 beleuchtet, um das Erkennen der Messgrößen für den Hilfsstoff durch die Detektoreinrichtung zu verbessern.

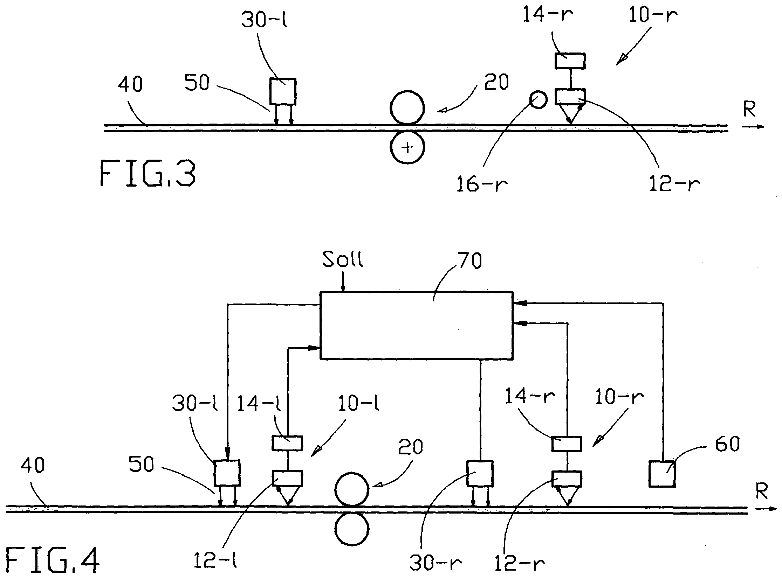

Figur 3 zeigt eine zweite Vorrichtung, die in einem nicht beanspruchten Verfahren benutzt wird, wobei die Vorrichtung 10 in Walzrichtung R gesehen nur hinter der Umformeinrichtung 20 angeordnet ist. Die Vorrichtung 10 ermöglicht dort eine Analyse des Hilfsstoffes 50 auf der Oberfläche des Umformgutes 40 nach erfolgtem Umformprozess. Insbesondere besteht so die Möglichkeit, die nach dem Umformprozess auf der Oberfläche verbleibende Restmenge des Hilfsstoffes 50 zu ermitteln. Die Restmenge kann vorteilhafterweise z.B. einer Regelung für die Menge des Hilfsstoffes 50 zugeführt werden, welche die vor der Umformeinrichtung zugeführte Menge an Hilfsstoff z.B. im Sinne einer Minimalmengenschmierung regelt. Die Minimalmengenschmierung zeichnet sich dadurch aus, dass auf der Eingangsseite der Umformeinrichtung 20 nur so viel Hilfsstoff 50 aufgetragen wird, wie während des Umformprozesses benötigt wird. Selbstverständlich ermöglicht die Analyse des Hilfsstoffes 50 hinter der Umformeinrichtung 20 auch wiederum eine Analyse der chemischen Zusammensetzung des Hilfsstoffes 50 und die erforderliche Korrektur der chemischen Zusammensetzung. Wie bereits oben unter Bezugnahme auf Figur 1 erwähnt, wird die chemische Zusammensetzung durch die gezielte Beeinflussung der Teilmengen der Einzelkomponenten des Hilfsstoffes durch Zugriff auf entsprechende Vorratsbehälter gezielt gesteuert. Auch können eventuelle Kontaminationen in dem Hilfsstoff zeitnah erkannt und eventuell beseitigt werden. Eine Kontamination des Hilfsstoffes 50 kann z.B. durch Hydraulikflüssigkeit erfolgen, welche sich während des Umformprozesses in der Umformeinrichtung 20 mit dem Hilfsstoff 50 mischt.

Aus der Information über die chemische Zusammensetzung der Restmenge des Hilfsstoffes auf der Oberfläche des Umformgutes 40 nach dem Umformprozess kann außerdem gezielt auf die Temperatur des Hilfsstoffs Einfluss genommen werden.

Figur 4 zeigt schließlich eine dritte Vorrichtung für das Verfahren für der vorliegende Erfindung, welche im Wesentlichen eine Kombination des ersten und zweiten Verfahrens darstellt. Die Kombination ist darin zu erkennen, dass bei der erfindungsgemäße Vorrichtung 10 sowohl vor wie auch hinter der Umformeinrichtung 20 angeordnet ist. Durch die beidseitige Anordnung der Vorrichtung wird es möglich, die oben erwähnten Messgrößen für den Hilfsstoff 50 sowohl vor, wie auch nach dem Umformprozess zu ermitteln und dann miteinander zu vergleichen. So kann aus der detektierten Menge des Hilfsstoffes 50 vor und hinter der Umformeinrichtung 20 auf den Verbrauch des Hilfsstoffes während des Umformprozesses geschlossen werden. Der Verbrauch seinerseits ermöglicht einen Rückschluss über die thermischen Bedingungen während des Umformprozesses und die thermischen Bedingungen ermöglichen bei genauer Kenntnis des Umformprozesses wiederum einen Rückschluss auf die Qualität des Umformgutes 40 nach Durchlaufen des Umformprozesses, d.h. einen Rückschluss auf dessen Glanz, dessen Planheit, dessen Texturierung oder dessen Rautiefe.

Ein Vergleich der chemischen Zusammensetzung des Hilfsstoffes 50 vor und nach der Umformeinrichtung 20 ermöglicht einen Rückschluss auf den Verbrauch bestimmter Additive oder die Bildung von Reaktionsprodukten während des Umformprozesses. Diesem Verhalten kann entgegengewirkt werden oder es kann ganz gezielt unterstützt werden, letzteres in den Fällen, wo umformrelevante Stoffe erst während des Umformprozesses gebildet werden.

Zum Durchführen der soeben beschriebenen Vergleichsoperationen und zum Durchführen einer jeweils geeigneten Beeinflussung des Hilfsstoffes 50 oder des Umformprozesses ist eine Vergleicher- bzw. Regelungseinrichtung erforderlich, die in Figur 4 mit den Bezugzeichen 70 bezeichnet ist.

Die Regelungseinrichtung 70 kann insbesondere ausgebildet sein, den gesamten Umformprozess auf Basis eines mathematischen Models desselben im Hinblick auf die oben genanten vorab definierten Qualitätsmerkmale für das Umformgut 40 geeignet zu regeln. Zu Realisierung dieser Qualitätsmerkmale werden der Regelungseinrichtung 70 geeignete Messgrößen, welche Ist-Werte repräsentieren, zugeführt, und typischerweise mit vorgegebenen Soll-Werten verglichen. So werden auch die von der erfindungsgemäßen Auswerteeinrichtung 14 ermittelten und oben definierten Messgrößen, wie z.B. die Menge des Hilfsstoffes 50 pro Flächeneinheit, dessen Temperatur, dessen chemische Zusammensetzung oder dessen Verteilung auf der Oberfläche des Umformgutes, der Regelungseinrichtung 70 zugeführt und unter Berücksichtigung des mathematischen Models des Umformprozesses geeignet ausgewertet. Das Messgerät 60 in Figur 4 repräsentiert beispielhaft die Messung der übrigen Messgrößen als Eingangsgrößen für die Regelungseinrichtung 70, welche nicht von der Analyseeinrichtung 14 bereitgestellt werden. Zur Realisierung der gewünschten Qualitätsmerkmale des Umformgutes ist die Regelungseinrichtung 70 ausgebildet, nach Auswertung der empfangenen Messgrößen unter Nutzung des mathematischen Modells des Umformprozesses in geeigneter Weise aus dem Umformprozess einzuwirken. Diese Einwirkung geschieht traditionell insbesondere durch Einstellung der Walzenkraft bei der Umformeinrichtung 20, aber die Beeinflussung wird gemäß der vorliegenden Erfindung, wie oben bereits beschrieben, die chemische Zusammensetzung und gegebenenfalls auch die Menge, die Verteilung oder die Temperatur des appliziten Hilfsstoffes 50 betreffen.

## Patentansprüche

1. Verfahren zum Korrigieren der chemischen Zusammensetzung eines Hilfsstoffes (50) auf der Oberfläche eines Umformgutes (40) vor einem Umformprozess,
**dadurch gekennzeichnet,**
**dass** die chemische Zusammensetzung einer Schicht des Hilfsstoffs vor und nach dem
Umformprozess in Form eines Walzprozesses mit Hilfe einer Spektralanalyse online analysiert wird;
**dass** die Zusammensetzung der Schicht des Hilfsstoffs vor dem Walzprozess mit dessen Zusammensetzung nach dem Walzprozess verglichen wird, um einen Rückschluss auf den Verbrauch bestimmter Komponenten des Hilfsstoffs während des Walzprozesses zu ermöglichen; und
**dass** erforderlichenfalls korrigierend auf die chemische Zusammensetzung des vor dem Walzprozess aufgetragenen Hilfsstoffs eingewirkt wird.

2. Verfahren nach Anspruch 1,
**dadurch gekennzeichnet,**
**dass** es sich bei der Spektralanalyse um die laserinduzierte, zeitaufgelöste Floureszenzspektralanalyse oder um eine Spektralanalyse im infraroten Lichtbereich handelt.

3. Verfahren nach einem der vorangegangenen Ansprüche,
**dadurch gekennzeichnet,**
**dass** es sich bei dem Hilfsstoff (50) beispielsweise um einen Schmierstoff, einen Kühlschmierstoff, ein Dressiermittel oder ein Nassdressiermittel handelt.

4. Verfahren nach einem der vorangegangen Ansprüche,
**dadurch gekennzeichnet,**
**dass** es sich bei den analysierten Messgrößen des Hilfsstoffs (50) z.B. um dessen Menge pro Flächeneinheit, dessen Temperatur, dessen Zusammensetzung, die Homogenität von dessen Verteilung auf dem Umformgut (40) und/oder dessen Schichtdicke handelt.

5. Verfahren nach Anspruch 4,
**dadurch gekennzeichnet,**
**dass** die Messgrößen als Regelgrößen mindestens einem Regelkreis zugeführt werden, welcher eine Applizierung des Hilfsstoffes (50) auf dem Umformgut (40) nach Maßgabe von vorgegebenen Sollwerten (Soll) veranlasst, wobei die Sollwerte für die Regelgrößen so vorgegeben sind, dass sie - bei Zugrundelegung des vorbekannten Umformprozesses - zur Einstellung bestimmter Umformparameter bei dem Umformprozess selber und/oder zur Ausbildung von Qualitätsmerkmalen in einem jeweils gewünschten Ausmaß bei dem umgeformten Umformgut führen.

6. Verfahren nach Anspruch 5,
**dadurch gekennzeichnet,**
**dass** es sich bei den beeinflussbaren Umformparametern z.B. um die Größe der Walzkraft oder die Stärke von Vibrationen von Walzen, handelt.

7. Verfahren nach Anspruch 5 oder 6,
**dadurch gekennzeichnet, dass** der Regelkreis - im Falle der Erfassung einer unerwünschten oder fehlerhaften, z.B. kontaminieten Zusammensetzung des Hilfsstoffes - ausgebildet ist, unter Zugriff auf Vorratsbehälter mit verschiedenen Komponenten, aus denen der Hilfsstoff zusammen gesetzt ist, den Hilfsstoff nachfolgend entsprechend den vorgegebenen Sollwerten für dessen Zusammensetzung zusammenzumischen.

8. Verfahren nach einem der Ansprüche 5 bis 7,
**dadurch gekennzeichnet,**
**dass** zur Berechnung der Sollwerte der Umformprozess durch ein mathematisches Modell simuliert wird.

9. Verfahren nach einem der Ansprüche 5 bis 8,
**dadurch gekennzeichnet,**
**dass** es sich bei den Qualtitätsmerkmalen für das umgeformte Umformgut z.B. um dessen Planheit, dessen Glanz oder dessen Texturierung, insbesondere das Nichtvorhandensein von Fischgrätenmustern, handelt.

10. Verfahren nach einem der vorangegangenen Ansprüche,
**dadurch gekennzeichnet,**
**dass** einzelnen Komponenten des Hilfsstoffs gezielt Marker- oder Tracer-Substanzen beigegeben sind.

11. Vorrichtung (10) mit
mindestens einer Detektoreinrichtung (12) zum Erzeugen eines Abtastsignals von einer Schicht eines Hilfsstoffs (50) auf der Oberfläche eines Umformgutes (40), insbesondere eines Metallbandes, wobei die Detektoreinrichtung (12) vor und/oder hinter einer Umformeinrichtung (20), insbesondere einem Walzgerüst, angeordnet ist; und
einer Analyseeinrichtung (14) zum Analysieren des von der Detektoreinrichtung (12) erzeugten Abtastsignals im Hinblick auf verschiedene spezifische Messgrößen für den Hilfsstoff (50);
**dadurch gekennzeichnet, dass**
die Analyseeinrichtung (14) als Online-Spektralanalyseeinrichtung ausgebildet ist.

12. Vorrichtung (10) nach Anspruch 11,
**gekennzeichnet durch**
mindestens ein Beleuchtungsmittel (16) zum Beleuchten des Hilfsstoffs auf dem Umformgut (40) während des Abtastens.

13. Vorrichtung (10) nach Anspruch 11 oder 12,
**dadurch gekennzeichnet, dass**
die Detektoreinrichtung (12) eine Mehrzahl von Detektorelementen (12', 12") aufweist, welche auf einer Linie (L) angeordnet sind, die in einer Richtung mit einer Komponente quer zur Walzrichtung (R) auf dem Umformgut verläuft.

14. Vorrichtung (10) nach einem der Ansprüche 11 bis 13,
**dadurch gekennzeichnet,**
**dass** es sich bei der Detektoreinrichtung (12) um einen Scanner handelt.

15. Vorrichtung (10) nach einem der Ansprüche 11 bis 14,
**dadurch gekennzeichnet,**
**dass** die Analyseeinrichtung (14) ausgebildet ist zur Durchführung des Verfahrens nach einem der Ansprüche 1 bis 10.

## Claims

1. Method for correction of the chemical composition of an additive (50) on the surface of a reshaping material (40) prior to a reshaping process,
**characterised in that**
the chemical composition of a layer of the additive is analysed on-line with the help of spectral analysis before and after the reshaping process in the form of a rolling process; the composition of the layer of the additive prior to the rolling process is compared with the composition thereof after the rolling process so as to enable a conclusion to be made about the consumption of specific components of the additive during the rolling process; and
if required corrective action is carried out on the chemical composition of the additive applied prior to the rolling process.

2. Method according to claim 1, **characterised in that** the spectral analysis is a laser-induced, time-resolved fluorescence spectral analysis or a spectral analysis in the infrared light range.

3. Method according to one of the preceding claims, **characterised in that** the additive (50) is, for example, a lubricant, a cooling lubricant, a tempering agent or a wet tempering agent.

4. Method according to any one of the preceding claims, **characterised in that** the analysed measurement variables of the additive (50) are, for example, the quantity thereof per unit of area, the temperature thereof, the composition thereof, the homogeneity of the distribution thereof on the reshaping material (40) and/or the layer thickness thereof.

5. Method according to claim 4, **characterised in that** the measurement variables are supplied as regulating variables to at least one regulating circuit which causes application of the additive (50) to the reshaping material (40) in accordance with predetermined target values (target), wherein the target values for the regulating variables are so predetermined that on the basis of the previously known reshaping process they lead to setting of specific reshaping parameters for the reshaping process itself and/or to creation of quality features to a respectively desired extent in the reshaped reshaping material.

6. Method according to claim 5, **characterised in that** the reshaping parameters capable of influencing are, for example, the level of rolling force or the intensity of vibrations of rolls.

7. Method according to claim 5 or 6, **characterised in that** the regulating circuit is constructed to mix the additive - in the case of detection of an undesired or faulty, for example contaminated, composition of the additive - subsequently in accordance with the predetermined target values for the composition thereof and with access to storage containers with different components from which the additive is composed.

8. Method according to any one of claims 5 to 7, **characterised in that** a mathematical model is simulated for calculation of the target values of the reshaping process.

9. Method according to any one of claims 5 to 8, **characterised in that** the quality features for the reshaped reshaping material are, for example the planarity thereof, the smoothness thereof or the texturing thereof, particularly the absence of herringbone patterns.

10. Method according to any one of the preceding claims, **characterised in that** marker or tracer substances are selectively admixed to individual components of the additive.

11. Device (10) with at least one detector device (12) for generating a scanning signal from a layer of an additive (50) on the surface of a reshaping material (40), particularly a metal strip, wherein the detector device (12) is arranged in front of and/or behind a reshaping device (20), particularly a roll stand; and an analysing device (14) for analysing the scanning signal, which is generated by the detector device (12), with respect to different specific measurement variables for the additive (50); **characterised in that** the analysing device (14) is constructed as an on-line spectral analysing device.

12. Device (10) according to claim 11, **characterised by** at least one illuminating means (16) for illumination of the additive on the reshaping material (40) during the scanning.

13. Device (10) according to claim 11 or 12, **characterised in that** the detector device (12) comprises a plurality of detector elements (12', 12") which are arranged on a line (L) extending in a direction with a component transverse to the rolling direction (R) on the reshaping material.

14. Device (10) according to any one of claims 11 to 13, **characterised in that** the detector device (12) is a scanner.

15. Device (10) according to any one of claims 11 to 14, **characterised in that** the analysing device (14) is constructed for carrying out the method according to any one of claims 1 to 10.

## Revendications

1. Procédé pour corriger la composition chimique d'un adjuvant (50) à la surface d'un produit de transformation (40) avant un processus de transformation, **caractérisé**
**en ce qu'**on analyse en ligne à l'aide d'une analyse spectrale la composition chimique d'une couche de l'adjuvant avant et après le processus de transformation sous la forme d'un processus de laminage ;
**en ce qu'**on compare la composition de la couche de l'adjuvant avant le processus de laminage à sa composition après le processus de laminage pour pouvoir tirer des conclusions en ce qui concerne la consommation de composants déterminés de l'adjuvant au cours du processus de laminage ; et
**en ce que**, si besoin en est, on intervient en corrigeant la composition chimique de l'adjuvant appliqué avant le processus de laminage.

2. Procédé selon la revendication 1, **caractérisé en ce que**, en ce qui concerne l'analyse spectrale, il s'agit de l'analyse spectrale par fluorescence résolue dans le temps, induite par laser, ou d'une analyse spectrale dans le domaine de l'infrarouge.

3. Procédé selon l'une quelconque des revendications précédentes, **caractérisé en ce que**, en ce qui concerne l'adjuvant (50) il s'agit par exemple d'un lubrifiant, d'un lubrifiant de refroidissement, d'un agent d'écrouissage ou d'un agent d'écrouissage par voie humide.

4. Procédé selon l'une quelconque des revendications précédentes, **caractérisé en ce que**, en ce qui concerne les grandeurs de mesure analysées de l'adjuvant (50), il s'agit par exemple de sa quantité par unité de surface, de sa température, de sa composition, de l'homogénéité de sa distribution sur le produit de déformation (40) et/ou de son épaisseur de couche.

5. Procédé selon la revendication 4, **caractérisé en ce qu'**on achemine les grandeurs de mesure sous la forme de grandeurs de réglage à au moins à un circuit de réglage qui procède à une application de l'adjuvant (50) sur le produit de transformation (40) en fonction de valeurs de consigne prédéfinies (Soll), les valeurs de consigne pour les grandeurs de réglage étant prédéfinies d'une manière telle que - en se basant sur le processus de déformation connu au préalable - elles donnent lieu au réglage de paramètres de déformation déterminés lors du processus de déformation lui-même et/ou à l'obtention de caractéristiques de qualité dans une mesure chaque fois désirée en ce qui concerne le produit de déformation qui a été transformé.

6. Procédé selon la revendication 5, **caractérisé en ce que**, en ce qui concerne les paramètres de transformation qui peuvent être influencés, il s'agit par exemple de l'intensité de la force de laminage ou de l'intensité des vibrations des cylindres.

7. Procédé selon la revendication 5 ou 6, **caractérisé en ce que** le circuit de réglage - dans le cas de l'enregistrement d'une composition de l'adjuvant non souhaitée ou défectueuse, par exemple d'une composition contaminée - est mis en oeuvre, via un accès à des récipients de réserve, pour mélanger l'adjuvant par la suite avec différents composants qui entrent dans la composition de l'adjuvant, de manière correspondante aux valeurs de consigne prédéfinies pour sa composition.

8. Procédé selon l'une quelconque des revendications 5 à 7, **caractérisé en ce que**, pour le calcul des valeurs de consigne, on simule le processus de transformation en utilisant un modèle mathématique.

9. Procédé selon l'une quelconque des revendications 5 à 8, **caractérisé en ce que**, en ce qui concerne les caractéristiques de qualité pour le produit de transformation qui a été transformé, il s'agit par exemple de sa planéité, de son brillant ou de sa texturation, en particulier de l'absence de motifs à chevrons.

10. Procédé selon l'une quelconque des revendications précédentes, **caractérisé en ce qu'**on ajoute à des composants individuels de l'adjuvant, des substances de marquage ou de traçage, de manière ciblée.

11. Dispositif (10) comprenant: au moins un mécanisme de détection (12) pour générer un signal de balayage d'une couche d'un adjuvant (50) à la surface d'un produit de transformation (40), en particulier d'une bande métallique, le mécanisme de détection (12) étant disposé devant et/ou derrière un mécanisme de transformation (20), en particulier une cage de laminoir; et un mécanisme d'analyse (14) pour l'analyse du signal de balayage généré par le mécanisme de détection (12) en ce qui concerne différentes grandeurs de mesure spécifiques pour l'adjuvant (50) ; **caractérisé en ce que** le mécanisme d'analyse (14) est réalisé sous la forme d'un mécanisme d'analyse spectrale en ligne.

12. Dispositif (10) selon la revendication 11, **caractérisé par** au moins un moyen d'éclairage (16) pour éclairer l'adjuvant sur le produit de transformation (40) au cours du balayage.

13. Dispositif (10) selon la revendication 11 ou 12, **caractérisé en ce que** le mécanisme de détection (12) présente une multitude d'éléments de détections (12', 12") qui sont disposés sur une ligne (L) qui s'étend dans une direction avec une composante transversalement par rapport à la direction de laminage (R) sur le produit de transformation.

14. Dispositif (10) selon l'une quelconque des revendications 11 à 13, **caractérisé en ce que**, en ce qui concerne le mécanisme de détection (12), il s'agit d'un dispositif de balayage.

15. Dispositif (10) selon l'une quelconque des revendications 11 à 14, **caractérisé en ce que** le mécanisme d'analyse (14) est réalisé pour la mise en oeuvre du procédé selon l'une quelconque des revendications 1 à 10.
